# EUROPÄISCHE PATENTANMELDUNG

(11) **EP 4 272 885 A1**
(43) Veröffentlichungstag der Anmeldung: **08.11.2023**
(21) Anmeldenummer: 23157488.0
(22) Anmeldetag: 20.02.2023
(51) Int. Cl.: B21D 39/04, B21D 39/06, F16B 7/00, B60G 7/00

(54) **VERFAHREN ZUR BEFESTIGUNG EINES BUCHSENKÖRPERS IN EINEM ROHRKÖRPER**

(30) Priorität: 02.05.2022 DE 102022110734
(71) Anmelder: Meleghy Automotive GmbH & Co. KG, 57234 Wilnsdorf (DE)
(72) Erfinder: Werle, Thomas, 51789 Lindlar-Frielingsdorf (DE); Jahn, Joachim, 47495 Rheinberg-Borth (DE)
(74) Vertreter: Kalkoff & Partner Patentanwälte mbB

(57) **Zusammenfassung**

Die Erfindung betrifft ein Verfahren zur Befestigung eines Buchsenkörpers in einem Rohrkörper, mit den Schritten
- Anordnen eines Buchsenkörpers in einem Rohrkörper,
- Verformen des Rohrkörpers im Bereich des Buchsenkörpers zur Erzeugung mindestens einer den Buchsenkörper in dem Rohrkörper festlegenden Verbindungsstelle.

Um ein Verfahren bereitzustellen, das auf einfache und zuverlässige Weise eine stabile und positionsgenaue Verbindung eines Buchsenkörpers in einem Rohrkörper ermöglicht, ist vorgesehen, dass der Rohrkörper derart verformt wird, dass die mindestens eine Verbindungsstelle an den Buchsenkörper angrenzend angeordnet ist.

## Beschreibung

Die Erfindung betrifft ein Verfahren zur Befestigung eines Buchsenkörpers in einem Rohrkörper, mit den Schritten
- Anordnen eines Buchsenkörpers in einem Rohrkörper,
- Verformen des Rohrkörpers im Bereich des Buchsenkörpers zur Erzeugung mindestens einer den Buchsenkörper in dem Rohrkörper festlegenden Verbindungsstelle.
Weiter betrifft die Erfindung eine Anordnung aus einem Rohrkörper mit mindestens einer an einem Rohrendabschnitt angeordneten Ausnehmung, und einem eine Buchsenöffnung aufweisenden Buchsenkörper.

Verfahren der eingangs genannten Art werden dazu verwendet, um einen Buchsenkörper, z.B. eine Buchse, ortsfest an einem Rohrkörper zu arretieren.

Zur Arretierung des Buchsenkörpers wird dieser zunächst in dem Rohrkörper, beispielsweise einem Rohr oder einer Strebe angeordnet. Anschließend wird der Rohrkörper im Bereich des Buchsenkörpers zur Erzeugung einer Verbindungsstelle verformt. Hierbei wird an der Verbindungsstelle beispielsweise unter Einsatz von Wärme und/oder Druck eine stoffschlüssige Verbindung zwischen dem Buchsenkörper und dem Rohrkörper gebildet. Derzeit führen die z.B. beim Verschweißen erforderlichen hohen Temperaturen an der Verbindungsstelle zu Gefügeänderungen des Rohrkörpers und/oder des Buchsenkörpers. Bereits geringe Gefügeänderungen führen zu einer mangelnden Festigkeit und Stabilität des Rohrkörpers sowie der Verbindung zwischen Rohrkörper und Buchsenkörper. Ferner erlauben die bekannten Verfahren keine exakte Positionierung der Buchsenkörper an dem Rohrkörper, sondern weisen hohe Toleranzen auf.

Der Erfindung liegt daher die Aufgabe zugrunde, ein Verfahren bereitzustellen, das auf einfache und zuverlässige Weise eine stabile und positionsgenaue Verbindung eines Buchsenkörpers in einem Rohrkörper ermöglicht. Ferner liegt der Erfindung die Aufgabe zugrunde, eine Anordnung bereitzustellen, die eine zuverlässige Befestigung eines Buchsenkörpers in einem Rohrkörper ermöglicht.

Die Erfindung löst die Aufgabe durch ein Verfahren nach Anspruch 1 und eine Anordnung aus einem Rohrkörper und einem Buchsenkörper nach Anspruch 9. Vorteilhafte Weiterbildungen der Erfindung sind in den abhängigen Ansprüchen angegeben.

Kennzeichnend für das Verfahren zur Befestigung des Buchsenkörpers ist, dass der Rohrkörper derart verformt wird, dass die mindestens eine Verbindungsstelle an den Buchsenkörper angrenzend angeordnet ist.

Erfindungsgemäß wird ein Buchsenkörper in einem Rohrkörper angeordnet und gegenüber diesem ausgerichtet. Der Buchsenkörper, z.B. eine Buchse, ist zylinderartig ausgebildet und kann aus einem beliebigen Werkstoff, beispielsweise einem Aluminium- oder einem Stahlwerkstoff gebildet sein. Der Buchsenkörper weist zwei im Abstand voneinander angeordnete Buchsenkörperstirnflächen auf. Vorzugsweise sind die beiden Buchsenkörperstirnflächen deckungsgleich, also in Form und Größe gleich und/oder kongruent, ausgebildet. Der Abstand zwischen den beiden Buchsenkörperstirnflächen definiert eine Höhe des Buchsenkörpers. Der Buchsenkörper weist einen sich entlang einer Längsachse des Buchsenkörpers zwischen den Buchsenkörperstirnflächen erstreckendenden, beispielsweise kreisförmigen, polygonförmigen oder bevorzugt ellipsenförmigen Querschnitt auf. Ferner sind die Buchsenkörperstirnflächen bevorzugt im Wesentlichen eben, d.h. erhebungs- und/oder vertiefungsfrei ausgebildet.

Der Rohrkörper, z.B. ein Rohr oder bevorzugt eine hohle Strebe, ist zylinderartig ausgebildet und weist einen sich entlang einer Längsachse des Rohrkörpers zwischen zwei jeweils an einem Rohrende angeordneten Rohrkörperstirnflächen erstreckenden beispielsweise kreisförmigen, ellipsenförmigen oder bevorzugt polygonförmigen, besonders bevorzugt rechteckigen Querschnitt auf. Unter einem Rohrkörper wird vorzugsweise ein länglicher Hohlkörper verstanden, d.h. dass der Rohrkörper eine sich entlang seiner Längsachse erstreckende Länge aufweist, die wesentlich größer als ein Durchmesser und/oder eine Breite und/oder eine Höhe des Rohrkörpers ist. Bevorzugt wird der Buchsenkörper in einem durch eine Rohrinnenwand begrenzten Hohlraum des Rohrkörpers angeordnet.

Der Rohrkörper wird erfindungsgemäß zur Erzeugung mindestens einer den Buchsenkörper in dem Rohrkörper festlegenden Verbindungsstelle im Bereich des Buchsenkörpers verformt, wodurch eine Verstellung des Buchsenkörpers entlang oder senkrecht zu der Längsachse des Rohrkörpers blockiert wird. Hierbei wird der Rohrkörper erfindungsgemäß derart verformt, dass die mindestens eine Verbindungsstelle an den Buchsenkörper angrenzend angeordnet ist. Dies bedeutet vorzugsweise, dass die Verbindungsstelle in radialer Richtung zu der Längsachse des Buchsenkörpers an einer der Buchsenkörperstirnflächen des Buchsenkörpers angrenzend angeordnet ist. Unter angrenzend wird verstanden, dass die Verbindungsstelle neben dem Buchsenkörper, bevorzugt in radialer Richtung der Längsachse des Buchsenkörpers neben der Buchsenkörperstirnfläche, den Buchsenkörper zumindest teilweise berührend angeordnet ist.

Durch den in dem Rohrkörper angeordneten Buchsenkörper kann die Stabilität und Festigkeit des Rohrkörpers erhöht werden. Mit dem Erzeugen der Verbindungsstelle neben dem Buchsenkörper und an diesen angrenzend wird eine form- und/oder kraftschlüssige Verbindung ermöglicht, wodurch auf eine stoffschlüssige Verbindung zwischen dem Rohrkörper und dem Buchsenkörper verzichtet werden kann. Hierdurch kann einer strukturellen Schwächung des Rohrkörpers und des Buchsenkörpers, die aus einer Schweißverbindung resultieren würde, entgegengewirkt werden, wodurch einer Beeinträchtigung der Stabilität und Festigkeit des Rohrkörpers sowie der Verbindung zwischen Buchsenkörper und Rohrkörper vermieden wird.

Nach einer vorteilhaften Weiterbildung der Erfindung ist vorgesehen, dass der Buchsenkörper vor und/oder während der Verformung des Rohrkörpers zu einer an dem Rohrkörperangeordneten Ausnehmung ausgerichtet wird, die bevorzugt an einem Rohrendabschnitt des Rohrkörpers angeordnet ist. Der Rohrkörper weist im Bereich seiner gegenüberliegenden Enden jeweils einen Rohrendabschnitt auf. Unter einem Rohrendabschnitt wird dabei ein Abschnitt des Rohrkörpers verstanden, der sich entlang der Längsachse des Rohrkörpers von einer ersten Rohrkörperstirnfläche in Richtung einer zweiten Rohrkörperstirnfläche oder umgekehrt erstreckt. Besonders bevorzugt bildet der Rohrendabschnitt den Abschnitt des Rohrkörpers, in dem der Buchsenkörper angeordnet wird. Die beiden Rohrkörperstirnflächen beschreiben ferner die abschließenden Querschnittsflächen an den Enden des Rohrkörpers, bzw. eines Rohrendabschnitts.

Der Rohrkörper weist vorzugsweise mindestens eine bevorzugt parallel zur Längsachse des Rohrkörpers angeordnete Seitenfläche auf. Besonders bevorzugt weist der Rohrkörper zwei im Abstand voneinander angeordnete Seitenflächen auf. Die Ausnehmung ist ein den Rohrkörper, bevorzugt den Rohrendabschnitt des Rohrkörpers im Winkel, besonders bevorzugt senkrecht zu der Längsachse des Rohrkörpers durchdringender freier Bereich. Beispielsweise ist die Ausnehmung eine den Rohrkörper von einer Seitenfläche bis zu der anderen Seitenfläche durchdringende Öffnung. Der Rohrkörper kann bereits eine Ausnehmung aufweisen, oder die Ausnehmung wird z.B. vor dem Anordnen des Buchsenkörpers in dem Rohrkörper durch Lochen des Rohrkörpers eingebracht. Der Begriff Lochen umfasst jedes denkbare Verfahren zur Herstellung der Ausnehmung, z.B. Bohren, Fräsen, Stanzen oder Laserschneiden. Vorzugsweise weist die Ausnehmung eine z.B. kreisförmige, polygonale oder ellipsenförmige Kontur auf.

Der Buchsenkörper wird bevorzugt derart angeordnet und/oder ausgerichtet, dass die Buchsenkörperstirnflächen parallel zu den Seitenflächen des Rohrkörpers angeordnet sind. Beim Ausrichten des Buchsenkörpers zu der Ausnehmung wird eine sich zwischen den Buchsenkörperstirnflächen erstreckende Mantelfläche des Buchsenkörpers koaxial zu einer mittig der Ausnehmung angeordneten Mittelachse der Ausnehmung angeordnet. Durch die Ausrichtung des Buchsenkörpers zu der Ausnehmung kann der Rohrkörper auf vorteilhafte Weise im Bereich der Ausnehmung mechanisch verstärkt werden, wodurch einer Verformung des Rohrkörpers, insbesondere an der Kontur der Ausnehmung entgegengewirkt werden kann.

Gemäß einer vorteilhaften Ausgestaltung der Erfindung ist vorgesehen, dass der Buchsenkörper eine Buchsenöffnung aufweist, die beim Ausrichten des Buchsenkörpers deckungsgleich zu der Ausnehmung des Rohrkörpers angeordnet wird. Die Buchsenöffnung ist ein den Buchsenkörper durchdringender freier Bereich, d.h. dass sich die Buchsenöffnung zwischen den Buchsenkörperstirnflächen erstreckt. Die Buchsenöffnung weist eine z.B. kreisförmige, polygonale oder bevorzugt ellipsenförmige Kontur auf. Unter deckungsgleich wird dabei verstanden, dass die Kontur der Ausnehmung und die Kontur der Buchsenöffnung in Form und/oder Größe übereinstimmen und/oder aneinander angrenzen und/oder anliegen.

Die Buchsenöffnung kann beliebig an dem Buchsenkörper angeordnet sein. Bevorzugt erstreckt sich die Buchsenöffnung koaxial zu der sich vorzugsweise senkrecht zu den Buchsenkörperstirnflächen erstreckenden Längsachse des Buchsenkörpers. Die Buchsenöffnung ist bevorzugt zentral an dem Buchsenkörper, insbesondere zentral auf einer der Buchsenkörperstirnflächen angeordnet und erstreckt sich entlang der Längsachse des Buchsenkörpers bis zu der gegenüberliegenden Buchsenkörperstirnfläche. Dadurch dass die Buchsenöffnung beim Ausrichten des Buchsenkörpers deckungsgleich zu der Ausnehmung des Rohrkörpers angeordnet wird, kann ein Verbindungselement, z.B. eine Strebe, ein Stift oder eine Schraube einfach und zuverlässig den Buchsenkörper und den Rohrkörper durchdringend sowie vorteilhaft parallel und/oder koaxial zu der Längsachse des Buchsenkörpers innerhalb der Buchsenöffnung und der Ausnehmung angeordnet werden.

Nach einer vorteilhaften Weiterbildung der Erfindung ist vorgesehen, dass der Rohrkörper zum Verformen in einem Winkel zu einer Rohrwand und/oder in Richtung auf die Längsachse des Rohrkörpers eingedrückt wird, wodurch vorzugsweise die Verbindungsstelle erzeugt wird. Unter Eindrücken wird dabei ein derartiges Umformen der Rohrwand, bevorzugt einer der Seitenflächen des Rohrkörpers, verstanden, dass an der Verbindungsstelle eine formschlüssige Verbindung zwischen dem Rohrkörper und dem Buchsenkörper, d.h. vorzugsweise ein Formschluss in Längsachsenrichtung des Rohrkörpers zwischen der an der Verbindungsstelle nach Innen gedrückten Rohrwand und der Mantelfläche des Buchsenkörper gebildet wird. Bevorzugt wird der Rohrkörper senkrecht zu einer Seitenfläche eingedrückt. Die Längsachse des Rohrkörpers erstreckt sich vorzugsweise senkrecht zu den Rohrkörperstirnflächen. Dadurch dass der Rohrkörper zum Verformen eingedrückt wird, kann die Verbindungsstelle auf einfache und zuverlässige Weise erzeugt werden.

Zum Befestigen des Buchsenkörpers in dem Rohrkörper kann grundsätzlich die Erzeugung einer Verbindungsstelle ausreichen. Beispielsweise kann eine den Buchsenkörper und/oder eine der Buchsenkörperstirnflächen zumindest teilweise oder vollständig umgreifende Einprägung durch Eindrücken der Rohrwand erzeugt werden. Gemäß einer vorteilhaften Weiterbildung der Erfindung ist jedoch vorgesehen, dass der Rohrkörper an mindestens zwei, bevorzugt drei, besonders bevorzugt vier jeweils im Abstand von einander und besonders bevorzugt über den Umfang des Buchsenkörpers verteilt angeordneten Verbindungsstellen eingedrückt wird. Die Verbindungsstellen können dabei jeweils in unterschiedlichen oder gleichen Abständen zueinander erzeugt werden. Bevorzugt wird der Rohrkörper derart eingedrückt, dass eine Verstellung des Buchsenkörpers in Richtung und senkrecht zu der Längsachse des Rohrkörpers blockiert ist. Durch die vorteilhaft vorgesehenen mehreren Verbindungsstellen kann der Buchsenkörper besonders zuverlässig in dem Rohrkörper befestigt und exakt positioniert werden.

Die Verbindungsstellen können beliebig verteilt, z.B. kreisförmig oder ellipsenförmig um den Buchsenkörper verteilt und an den Buchenkörper angrenzend angeordnet sein. Nach einer vorteilhaften Ausgestaltung der Erfindung ist vorgesehen, dass die beim Eindrücken des Rohrkörpers erzeugten Verbindungsstellen polygonförmig um den Buchsenkörper verteilt angeordnet werden. Bevorzugt sind die Verbindungsstellen rechteckförmig verteilt um den Buchsenkörper angeordnet, d.h. dass die Verbindungsstellen bei einer vorteilhaften Anzahl von vier Verbindungsstellen vorzugsweise die Ecken eines Rechtecks bilden. Zur weiteren Verstärkung der Verbindung zwischen dem Buchsenkörper und dem Rohrkörper können beispielsweise auch Verbindungsstellen entlang von Seiten des durch vier Verbindungsstellen gebildeten Rechtecks angeordnet sein. Beim Eindrücken des Rohrkörpers werden die Verbindungsstellen vorzugsweise gleichzeitig erzeugt. Der Rohrkörper kann auch mehr als vier Verbindungsstellen aufweisen. Beispielsweise wird der Rohrkörper zur Erzeugung von acht Verbindungsstellen jeweils auf einer der Seitenflächen eingedrückt. Durch die polygonförmige Anordnung der Verbindungsstellen kann auf vorteilhafte Weise einem unerwünschten Verschieben des Buchsenkörpers in dem Rohrkörper entgegengewirkt werden.

Die Verbindungsstelle kann grundsätzlich eine beliebige, z.B. an den Querschnitt des Buchsenkörpers angepasste Form aufweisen. Gemäß einer vorteilhaften Weiterbildung der Erfindung ist vorgesehen, dass eine Rohrwand des Rohrkörpers zur Erzeugung einer punktförmigen Verbindungsstelle mittels einer an einem Zentrierdorn angeordneten Körnerspitze eingedrückt wird. Der Zentrierdorn ist vorzugsweise zylinderartig ausgebildet und weist einen sich entlang einer Längsachse des Zentrierdorns erstreckenden z.B. kreisförmigen, polygonförmigen oder ellipsenförmigen Querschnitt auf. Der Zentrierdorn kann einen zylinderartigen Zentrierkörper mit einem Endstück aufweisen, das beispielsweise als Spitze ausgebildet ist, also entlang der Längsachse des Zentrierdorns spitz zuläuft oder bevorzugt als eine im Winkel, besonders bevorzugt senkrecht zu der Längsachse des Zentrierdorns angeordnete Stirnfläche ausgebildet ist. Ferner weist der Zentrierdorn einen vorzugsweise senkrecht zu der Längsachse des Zentrierdorns an dem Zentrierkörper angeordneten Auflageabschnitt auf.

Die Körnerspitze ist kegelförmig, also konusförmig ausgebildet, d.h. dass der Querschnitt der Körnerspitze parallel zu der Längsachse des Zentrierdorns stetig abnimmt, sodass die Körnerspitze spitz zuläuft. Vorzugsweise ist die Körnerspitze im Abstand von dem Zentrierkörper angeordnet. Vorzugsweise erstreckt sich die Körnerspitze im Winkel, bevorzugt senkrecht von einer Auflagefläche des Auflageabschnitts, also besonders bevorzugt parallel zu der Längsachse des Zentrierdorns. Bevorzugt sind an dem Zentrierdorn mehrere Körnerspitzen angeordnet. Besonders bevorzugt entspricht die Anzahl der Körnerspitzen der Anzahl der an dem Rohrkörper zu erzeugenden Verbindungsstellen. Durch die Anordnung der Körnerspitzen zueinander kann die Anordnung der Verbindungsstellen, z.B. die vorteilhafte polygonförmige Anordnung festgelegt werden. Die Körnerspitzen können beispielsweise kraftschlüssig, z.B. mittels einer Gewindeverbindung mit dem Auflageabschnitt des Zentrierdorns verbunden sein, wodurch die Körnerspitzen beliebig undje nach Form des zu befestigenden Buchsenkörpers angeordnet werden können. Beispielsweise sind an dem Auflageabschnitt mehrere verteilt angeordnete erste Verbindungsabschnitte, z.B. ein Innengewinde aufweisende Bohrungen angeordnet, mit denen ein an den Körnerspitzen angeordneter zweiter Verbindungsabschnitt, z.B. ein Außengewinde verschraubt werden kann. Besonders bevorzugt sind die Körnerspitzen einstückig mit dem Aufnahmeabschnitt verbunden.

Zum Eindrücken der Rohrwand des Rohrkörpers, d.h. zur Erzeugung der Verbindungsstellen wird der Zentrierdorn in einer in einem Winkel, vorteilhaft senkrecht zu der Rohrwand angeordneten Bewegungsbahn in Richtung auf den Rohrkörper verstellt. Die Bewegungsbahn des Zentrierdorns ist bevorzugt koaxial zu der Längsachse des Buchsenkörpers und/oder der Mittelachse der Ausnehmung angeordnet. Der Zentrierdorn wird beispielsweise entlang der Bewegungsbahn in Richtung auf den in dem Rohrkörper angeordneten Buchsenkörper verstellt. Der Zentrierdorn kannje nach Werkstoff des Rohrkörpers manuell, z.B. per Hand oder bevorzugt maschinell z.B. mittels eines beispielsweise elektrisch, pneumatisch oder hydraulisch angetriebenen Kolbens bewegt werden. Der Zentrierkörper wird bevorzugt zuerst in die Ausnehmung und anschließend in die Buchsenöffnung des Buchsenkörpers verstellt. Durch den Zentrierdorn, insbesondere den Zentrierkörper des Zentrierdorns wird der in dem Rohrkörper angeordnete Buchsenkörper zu der Ausnehmung und bevorzugt die Buchsenöffnung deckungsgleich zu der Ausnehmung ausgerichtet. Sobald die Körnerspitzen mit der Rohrwand des Rohrkörpers in Kontakt kommen, wird eine auf den Zentrierdorn aufgebrachte Kraft auf den Rohrkörper übertragen und drückt die Rohrwand nach Innen, wodurch der Buchsenkörper in der durch den Zentrierdorn eingestellten Position an dem Rohrkörper fixiert wird.

Durch das Eindrücken des Rohrkörpers mittels der Körnerspitzen sind die Verbindungsstellen punktuell, z.B. als kreisförmige, polygonförmige oder ellipsenförmige Vertiefungen auf der Rohrwand ausgebildet. Die vorteilhafte Ausgestaltung des Zentrierdorns ermöglicht das Ausrichten des Buchsenkörpers und das Eindrücken des Rohrkörpers in einem Bewegungsablauf, also einer Verstellung des Zentrierdorns entlang der Bewegungsbahn, wodurch der Buchsenkörper besonders schnell in dem Rohrkörper befestigt werden kann.

Der Rohrkörper kann an den Verbindungsstellen beliebig, beispielsweise mindestens mit einer Tiefe von 1 mm eingedrückt werden. Nach einer vorteilhaften Ausgestaltung der Erfindung ist jedoch vorgesehen, dass der Rohrkörper an den Verbindungsstellen mit einer Tiefe von bis zu 3 mm, bevorzugt von bis zu 2,5 mm, besonders bevorzugt von bis zu 2 mm eingedrückt wird. Unter der Tiefe wird dabei der maximale Abstand zwischen der verformungsfreien Rohrwand, bevorzugt der Seitenfläche des Rohrkörpers und der an der Verbindungsstelle bevorzugt als Vertiefung ausgebildeten nach Innen verformten Rohrwand verstanden. Die Begrenzung der Tiefe, mit der der Rohrkörper eingedrückt wird kann beispielsweise durch die Ausgestaltung der Körnerspitzen und/oder die Bewegung des Zentrierdorns erwirkt werden. Durch die Begrenzung der Tiefe der Verbindungsstellen kann einem unerwünschten Durchtritt der Körnerspitzen durch die Rohrwand und einer damit einhergehenden strukturellen Schwächung des Rohrkörpers entgegengewirkt werden.

An dem Rohrkörper können auch mehrere, bevorzugt mindestens zwei Buchsenkörper befestigt werden. Hierbei werden beispielsweise zwei Buchsenkörper entlang der Längsachse des Rohrkörpers wie vorstehend beschrieben im Abstand voneinander an dem Rohrkörper befestigt. Ferner können an beiden Rohrendabschnitten des Rohrkörpers jeweils ein oder mehrere im Abstand voneinander angeordnete Buchsenkörper in dem Rohrkörper befestigt werden. Bevorzugt wird an den beiden Rohrendabschnitten gleichzeitig mindestens ein Buchsenkörper befestigt.

Kennzeichnend für die Anordnung aus dem Rohrkörper und dem Buchsenkörper ist, dass der Buchsenkörper durch mindestens eine an den Buchsenkörper angrenzende Verbindungsstelle in dem Rohrkörper festgelegt ist. Rohrkörper und Buchsenkörper können jeweils wie vorstehend zu dem Verfahren zur Befestigung des Buchsenkörpers in dem Rohrkörper beschrieben ausgebildet sein.

Nach einer vorteilhaften Weiterbildung der Anordnung aus Rohrkörper und Buchsenkörper ist vorgesehen, dass der Buchsenkörper durch mindestens zwei, bevorzugt mindestens drei, besonders bevorzugt mindestens vier jeweils beabstandet angeordnete Verbindungsstellen in dem Rohrkörper festgelegt ist und die Buchsenöffnung deckungsgleich zu der Ausnehmung des Rohrkörpers angeordnet ist.

Das Verfahren zur Befestigung eines Buchsenkörpers in einem Rohrkörper kann in einem als "MiMEC" bezeichneten System erfolgen.

Ein Ausführungsbeispiel der Erfindung wird nachstehend mit Bezug auf die Zeichnungen erläutert. In den Zeichnungen zeigen:
- Fig.1-4: in schematischer Darstellung beispielhafte Schritte eines Verfahrens zur Befestigung eines Buchsenkörpers in einem Rohrkörper und
- Fig. 5: einen Rohrendabschnitt eines Rohrkörpers mit zwei Buchsenkörpern.

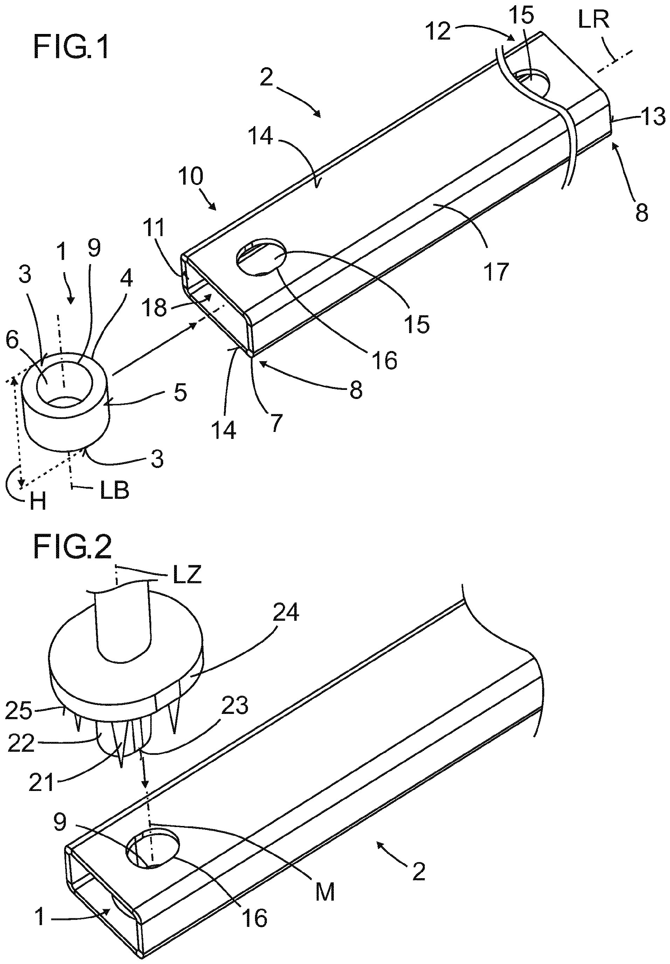

In den Fig. 1-4 sind in schematischer Darstellung beispielhafte Schritte eines Verfahrens zur Befestigung eines Buchsenkörpers 1 in einem Rohrkörper 2 dargestellt.

Der Buchsenkörper 1 ist zylinderartig ausgebildet und weist zwei im Abstand einer Höhe H des Buchsenkörpers 1 zueinander angeordnete Buchsenkörperstirnflächen 3 auf. Der Buchsenkörper 1 weist einen sich entlang einer Längsachse LB des Buchsenkörpers 1 zwischen den Buchsenkörperstirnflächen 3 erstreckenden ellipsenförmigen Querschnitt 4 und eine Mantelfläche 5 auf. Ferner weist der Buchsenkörper 1 eine auf einer der Buchsenkörperstirnflächen 3 angeordnete und sich entlang der Längsachse LB des Buchsenkörpers 1 bis zu der anderen Buchsenkörperstirnfläche 3 erstreckende Buchsenöffnung 6 auf. Die Buchsenöffnung 6 weist eine ellipsenförmige Kontur 9 auf.

Der Rohrkörper 2 ist zylinderartig ausgebildet und weist einen sich entlang einer Längsachse LR des Rohrkörpers 2 erstreckenden rechteckigen Querschnitt 7 auf. Darüber hinaus weist der Rohrkörper 2 im Bereich seiner gegenüberliegenden Enden 8 jeweils einen Rohrendabschnitt 10, 12 auf. Ein erster Rohrendabschnitt 10 erstreckt sich entlang der Längsachse LR des Rohrkörpers 2 von einer ersten Rohrkörperstirnfläche 11 zu einer an einem zweiten Rohrkörperendabschnitt 12 angeordneten zweiten Rohrkörperstirnfläche 13. Die beiden Rohrkörperstirnflächen 11, 13 beschreiben die abschließenden Querschnittsflächen an den Enden 8 des Rohrkörpers 2. Ferner weist der Rohrkörper 2 zwei im Abstand voneinander angeordnete Seitenflächen 14 auf. An den Rohrendabschnitten 10, 12 ist jeweils eine mittels Lochens des Rohrkörpers 2 erzeugte Ausnehmung 15 angeordnet. Die Ausnehmung 15 ist eine den Rohrkörper 2 senkrecht von einer Seitenfläche 14 bis zu der anderen Seitenfläche 14 durchdringende Öffnung. Die Ausnehmung 15 weist eine ellipsenförmige Kontur 16 auf.

Der Buchsenkörper 1 wird, wie in Fig. 1 dargestellt, in dem Rohrkörper 2 angeordnet. Hierzu wird der Buchsenkörper 1 in Richtung der Längsachse LR des Rohrkörpers 2 verstellt und gemäß Fig.2 in einem durch eine Rohrwand 17 des Rohrkörpers 2 begrenzenten Hohlraum 18 angeordnet. Durch das Anordnen des Buchsenkörpers 1 in dem Rohrkörper 2 sind die Buchsenkörperstirnflächen 3 parallel zu den Seitenflächen 14 des Rohrkörpers 2 angeordnet.

Der Rohrkörper 2 wird zur Erzeugung von vier den Buchsenkörper 1 in dem Rohrkörper 2 festlegenden Verbindungsstellen 19 im Bereich des Buchsenkörpers 1 verformt, wodurch eine Verstellung des Buchsenkörpers 1 entlang und senkrecht zu der Längsachse LR des Rohrkörpers 2 blockiert ist. Die Rohrwand 17 des Rohrkörpers 2 wird zur Erzeugung der Verbindungsstellen 19 mittels vier jeweils im Abstand zueinander an einem Zentrierdorn 20 angeordneten Körnerspitzen 21 eingedrückt.

Der Zentrierdorn 20 weist einen Zentrierkörper 22 mit einem als Stirnfläche 23 ausgebildeten Endstück auf. Die Stirnfläche 23 des Zentrierkörpers 22 ist senkrecht zu einer Längsachse LZ des Zentrierdorns 20 angeordnet. Ferner weist der Zentrierdorn 20 einen senkrecht zu der Längsachse LZ des Zentrierdorns 20 an dem Zentrierkörper 22 angeordneten Auflageabschnitt 24 mit einer Auflagefläche 25 auf.

Die Körnerspitzen 21 sind kegelförmig ausgebildet und erstrecken sich senkrecht von der Auflagefläche 25 des Auflageabschnitts 24 sowie parallel zu der Längsachse LZ des Zentrierdorns 20. Durch die Anordnung der Körnerspitzen 21 zueinander wird die Anordnung der auf dem Rohrkörper 2 erzeugten Verbindungsstellen 19 zueinander festgelegt.

Der Zentrierdorn 20 wird entlang einer senkrecht zu einer der Seitenflächen 14 der Rohrwand 17 des Rohrkörpers 2 angeordneten Bewegungsbahn in Richtung auf in dem Rohrkörper 2 angeordneten Buchsenkörper 1 verstellt. Der Zentrierkörper 22 des Zentrierdorns 20 wird zuerst in die Ausnehmung 15 und anschließend in die Buchsenöffnung 6 des Buchsenkörpers 1 verstellt, wodurch der Buchsenkörper 1 zu der Ausnehmung 15 ausgerichtet wird. Beim Ausrichten wird der Buchsenkörpers 1 koaxial zu einer mittig der Ausnehmung 15 angeordneten Mittelachse M angeordnet. Darüber hinaus wird die Buchsenöffnung 6 beim Ausrichten des Buchsenkörpers 1 deckungsgleich zu der Ausnehmung 15 angeordnet, d.h., dass die Kontur 16 der Ausnehmung 15 und die Kontur 9 der Buchsenöffnung 6 aneinander angrenzen. Eine maschinell mittels eines Kolbens auf den Zentrierdorn 20 aufgebrachte Kraft wird auf den Rohrkörper 2 übertragen, sobald die Körnerspitzen 21 mit der Seitenfläche 14 der Rohrwand 17 in Kontakt kommt.

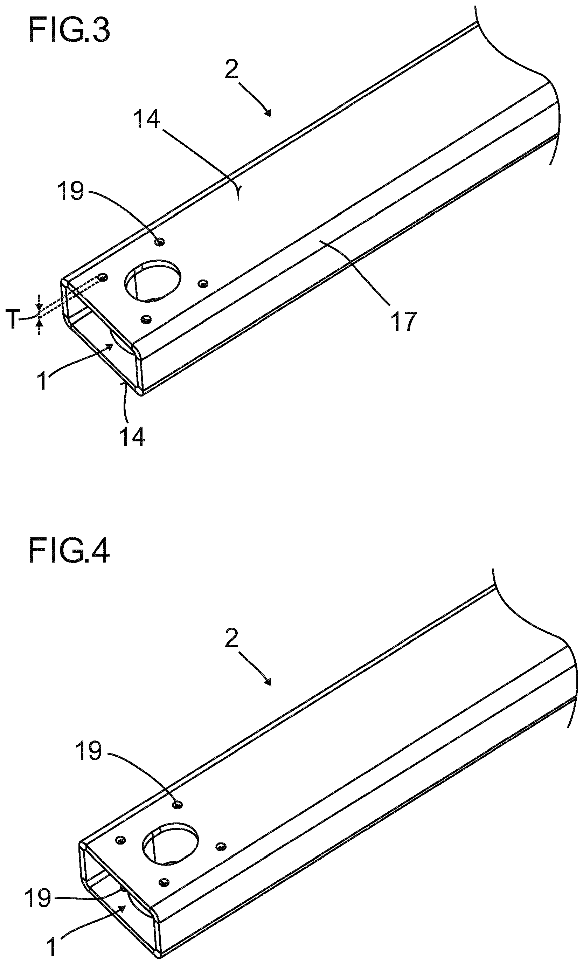

Durch das Eindrücken des Rohrkörpers 2 mittels der Körnerspitzen 21 sind die Verbindungsstellen 19, wie in Fig. 3 dargestellt punktförmig, also als punktuelle kreisförmige Vertiefungen auf der Seitenfläche 14 der Rohrwand 17 ausgebildet. Die Verbindungsstellen 19 werden durch die Anordnung der Körnerspitzen 21 rechteckförmig um den Buchsenkörper 1 verteilt angeordnet. Ferner sind die Verbindungsstellen 19 an die Mantelfläche 5 und eine der Buchsenkörperstirnflächen 3 des Buchsenkörper 1 angrenzend angeordnet, d.h. dass die Verbindungsstellen 19 in radialer Richtung der Längsachse LB des Buchsenkörpers 1 neben der Buchsenkörperstirnfläche 3 und die Mantelfläche 5 des Buchsenkörpers 1 berührend angeordnet sind. Der Rohrkörper 2 wird an den Verbindungsstellen 19 mit einer Tiefe T von 2 mm eingedrückt. Durch das Eindrücken des Rohrkörpers 2 wird an den Verbindungsstellen 19 eine formschlüssige Verbindung zwischen dem Rohrkörper 2 und dem Buchsenkörper 1, d.h. ein Formschluss in Längsachsenrichtung des Rohrkörpers 2 zwischen der nach Innen gedrückten Seitenfläche 14 der Rohrwand 17 und der Mantelfläche 5 des Buchsenkörpers 1 gebildet.

Nach einer zweiten Ausführungsform des Verfahrens zur Befestigung des Buchsenkörpers 1 in dem Rohrkörper 2 werden an beiden Seitenflächen 14 des Rohrkörpers 2, wie in Fig. 4 dargestellt, jeweils vier Verbindungsstellen 19 gleichzeitig wie vorstehend beschrieben erzeugt, wodurch der Buchsenkörper 1 mittels acht punktförmiger Verbindungsstellen 19 festgelegt wird.

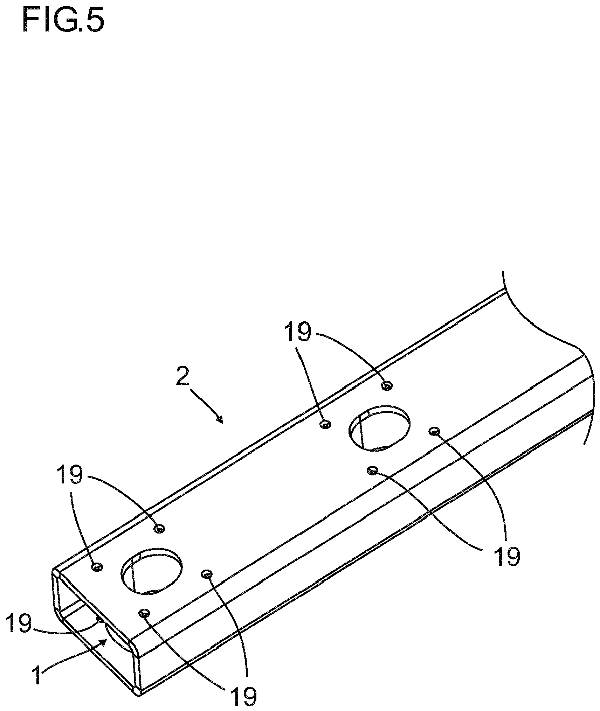

Wie in Fig. 5 dargestellt werden gemäß einer dritten Ausführungsform des Verfahrens zur Befestigung des Buchsenkörpers 1 in dem Rohrkörper 2 zwei Buchsenkörper 1 entlang der Längsachse LR des Rohrkörpers 2 im Abstand voneinander an dem ersten Rohrendabschnitt 10 in dem Rohrkörper 1 wie vorstehend beschrieben befestigt.

In einer weiteren Ausführungsform des Verfahrens zur Befestigung des Buchsenkörpers 1 in dem Rohrkörper 2 wird an beiden Rohrendabschnitten 10, 12 gleichzeitig ein Buchsenkörper 1 wie vorstehend beschrieben befestigt.

Alle Ausführungsformen des Verfahrens zur Befestigung des Buchsenkörpers 1 in dem Rohrkörper 2 können in einem als "MiMEC" bezeichneten System erfolgen.

Durch den in dem Rohrkörper 2 angeordneten Buchsenkörper 1 kann die Stabilität und Festigkeit des Rohrkörpers 2 erhöht werden. Mit dem Erzeugen der Verbindungsstellen 19 neben dem Buchsenkörper 1 und an diesen angrenzend wird eine formschlüssige Verbindung ermöglicht, wodurch auf eine stoffschlüssige Verbindung zwischen dem Rohrkörper 2 und dem Buchsenkörper 1 verzichtet werden kann.

Alle in Verbindung mit den einzelnen Ausführungsformen der Erfindung erläuterten Merkmale können in unterschiedlicher Kombination für das Verfahren vorgesehen sein, um gleichzeitig deren vorteilhafte Wirkungen zu realisieren, auch wenn diese zu unterschiedlichen Ausführungsformen beschrieben worden sind.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste

- 1: Buchsenkörper
- 2: Rohrkörper
- 3: Buchsenkörperstirnflächen
- 4: Querschnitt des Buchsenkörpers
- 5: Mantelfläche
- 6: Buchsenöffnung
- 7: Querschnitt des Rohrkörpers
- 8: Ende des Rohrkörpers
- 9: Kontur der Buchsenöffnung
- 10: erster Rohrendabschnitt
- 11: erste Rohrkörperstirnfläche
- 12: zweiter Rohrendabschnitt
- 13: zweite Rohrkörperstirnfläche
- 14: Seitenfläche
- 15: Ausnehmung
- 16: Kontur der Ausnehmung
- 17: Rohrwand
- 18: Hohlraum
- 19: Verbindungsstelle
- 20: Zentrierdorn
- 21: Körnerspitze
- 22: Zentrierkörper
- 23: Stirnfläche/Endstück
- 24: Auflageabschnitt
- 25: Auflagefläche
- H: Höhe des Buchsenkörpers
- LB: Längsachse des Buchsenkörpers
- LR: Längsachse des Rohrkörpers
- LZ: Längsachse des Zentrierdorns
- M: Mittelachse der Ausnehmung
- T: Tiefe der Verbindungsstelle

## Patentansprüche

1. Verfahren zur Befestigung eines Buchsenkörpers in einem Rohrkörper, mit den Schritten
- Anordnen eines Buchsenkörpers (1) in einem Rohrkörper (2),
- Verformen des Rohrkörpers (2) im Bereich des Buchsenkörpers (1) zur Erzeugung mindestens einer den Buchsenkörper (1) in dem Rohrkörper (2) festlegenden Verbindungsstelle (19),
**dadurch gekennzeichnet, dass** der Rohrkörper (2) derart verformt wird, dass die mindestens eine Verbindungsstelle (19) an den Buchsenkörper (1) angrenzend angeordnet ist.

2. Verfahren nach Anspruch 1, **dadurch gekennzeichnet, dass** der Buchsenkörper (1) vor und/oder während dem Verformen des Rohrkörpers (2) zu einer an dem Rohrkörper (2), bevorzugt an einem Rohrendabschnitt (10,12) des Rohrkörpers (2), angeordneten Ausnehmung (15) ausgerichtet wird.

3. Verfahren nach einem oder mehrerer der vorherigen Ansprüche, **dadurch gekennzeichnet, dass** der Buchsenkörper (1) eine Buchsenöffnung (6) aufweist, die beim Ausrichten des Buchsenkörpers (1) deckungsgleich zu der Ausnehmung (15) des Rohrkörpers (2) angeordnet wird.

4. Verfahren nach einem oder mehrerer der vorherigen Ansprüche, **dadurch gekennzeichnet, dass** der Rohrkörper (2) zum Verformen in einem Winkel zu einer Rohrwand (17) und/oder in Richtung auf eine Längsachse (LR) des Rohrkörpers (2) eingedrückt wird.

5. Verfahren nach einem oder mehrerer der vorherigen Ansprüche, **dadurch gekennzeichnet, dass** der Rohrkörper (2) an mindestens zwei, bevorzugt drei, besonders bevorzugt vier jeweils im Abstand von einander angeordneten Verbindungsstellen (19) eingedrückt wird.

6. Verfahren nach einem oder mehrerer der vorherigen Ansprüche, **dadurch gekennzeichnet, dass** die beim Eindrücken des Rohrkörpers (2) erzeugten Verbindungsstellen (19) polygonförmig um den Buchsenkörper (1) verteilt angeordnet werden.

7. Verfahren nach einem oder mehrerer der vorherigen Ansprüche, **dadurch gekennzeichnet, dass** die Rohrwand (17) des Rohrkörpers (2) zur Erzeugung einer punktförmigen Verbindungsstelle (19) mittels einer an einem Zentrierdorn (20) angeordneten Körnerspitze (21) eingedrückt wird.

8. Verfahren nach einem oder mehrerer der vorherigen Ansprüche, **dadurch gekennzeichnet, dass** der Rohrkörper (2) an den Verbindungsstellen (19) mit einer Tiefe (T) bis zu 3 mm, bevorzugt bis zu 2,5 mm, besonders bevorzugt bis zu 2 mm eingedrückt wird.

9. Anordnung, insbesondere nach einem Verfahren nach einem der Ansprüche 1 bis 8 hergestellt, aus
- einem Rohrkörper (2) mit mindestens einer an einem Rohrendabschnitt (10, 12) angeordneten Ausnehmung (15) und
- einem eine Buchsenöffnung (6) aufweisenden Buchsenkörper (1),
**dadurch gekennzeichnet, dass** der Buchsenkörper (1) durch mindestens eine an den Buchsenkörper (1) angrenzende Verbindungsstelle (19) in dem Rohrkörper (2) festgelegt ist.

10. Anordnung nach Anspruch 9, **dadurch gekennzeichnet, dass** der Buchsenkörper (1) durch mindestens zwei, bevorzugt mindestens drei, besonders bevorzugt mindestens vier jeweils beabstandet angeordnete Verbindungsstellen (19) in dem Rohrkörper (2) festgelegt ist und die Buchsenöffnung (6) deckungsgleich zu der Ausnehmung (15) des Rohrkörpers (2) angeordnet ist.
